# EUROPÄISCHE PATENTSCHRIFT

(11) **EP 1 831 527 B1**
(45) Veröffentlichungstag und Bekanntmachung des Hinweises auf die Patenterteilung: **02.07.2008**
(21) Anmeldenummer: 05799443.6
(22) Anmeldetag: 24.10.2005
(51) Int. Cl.: F02D 41/22, F01P 11/16

(54) **VERFAHREN ZUR ÜBERWACHUNG DER FUNKTIONSFÄHIGKEIT EINES TEMPERATURSENSORS**
METHOD FOR MONITORING THE FUNCTIONAL CAPACITY OF A TEMPERATURE SENSOR
PROCEDE POUR SURVEILLER LE BON FONCTIONNEMENT D'UN CAPTEUR DE TEMPERATURE

(30) Priorität: 22.12.2004 DE 102004061815
(43) Veröffentlichungstag der Anmeldung: 12.09.2007
(73) Patentinhaber: ROBERT BOSCH GMBH, 70442 Stuttgart (DE)
(72) Erfinder: FOERSTNER, Dirk, 70374 Stuttgart (DE); ECKERT, Andreas, 71272 Renningen (DE); GOETZ, Siegfried, 70186 Stuttgart (DE); NEUMANN, Joerg, 70469 Stuttgart (DE)
(86) Internationale Anmeldenummer: PCT/EP2005/055484
(87) Internationale Veröffentlichungsnummer: WO 2006/066988

(56) Entgegenhaltungen:
- DE-A- 4 426 494
- US-A- 4 774 910
- US-A1- 2004 184 507

## Beschreibung

### Stand der Technik

Die vorliegende Erfindung betrifft ein Verfahren zur Überwachung der Funktionsfähigkeit eines Temperatursensors.

Sensoren, die für die Motorsteuerung einer Brennkraftmaschine eingesetzt werden, müssen überwacht werden, um die Sicherheit und Einhaltung von Emissionen während des Betriebs zu gewährleisten.
Unter anderem muss für den Kühlwassertemperatursensor geprüft werden, ob er in einem hohen Temperaturbereich hängt und damit dauerhaft eine zu hohe Kühltemperatur signalisiert.
Es ist bekannt, die Signale des Kühlwassertemperatursensors durch die Steuergerät-Software auf Signal-Grenzwerte zu überwachen. Des Weiteren ist bekannt, zu überwachen, ob nach Motorstart ein Mindestwert erreicht wird bzw. eine minimale Signaländerung auftritt ("dynamische Plausibilisierung").

Aus der DE 101 20 968 AI ist bekannt, während des Betriebs zu prüfen, ob bei Übergang von einem niedrigen in einen hohen Lastbereich eine Änderung des Kühlwassertemperatursignals auftritt. Ist dies nicht der Fall wird ein Fehler gemeldet.

Die DE 44 26 494 AI offenbart die Überwachung eines Kühltemperatursensors und Thermostats, indem die zeitliche Änderung des Temperatursensors überwacht wird. Ist diese zu groß, wird ein Fehler erkannt. Des Weiteren wird das Temperaturverhalten bei Motorstart und unter speziellen Fahrbedingungen wie Leerlauf zum einen anhand typischer Anstiegsverläufe der Kühltemperatur nach Motorstart, zum anderen mittels eines Vergleichs zu anderen Signalen geprüft.

### Probleme des Standes der Technik

Mit den Verfahren nach Stand der Technik ist es nicht möglich, einen Sensor, insbesondere einen Temperatursensor, auf Verharren in hohem Signalbereich zu überwachen bzw. diesen Fehler festzustellen ("High Side Check").

Aufgabe der vorliegenden Erfindung ist es daher, ein Verfahren anzugeben, das das Verharren eines Sensors, insbesondere eines Kühlwassersensors, im hohen Signalbereich erkennt.

### Vorteile der Erfindung

Dieses Problem wird gelöst durch ein Verfahren zur Überwachung der Funktionsfähigkeit eines Temperatursensors, der ein elektrisches Signal abhängig von der gemessenen Temperatur abgeben kann und insbesondere im Kühlwasserkreislauf einer Brennkraftmaschine angeordnet ist, umfassend die Schritte: Kennzeichnen des Sensors als möglich fehlerhaft, wenn der Sensor bei Motorstop mindestens einen Maximalwert der Kühlflüssigkeitstemperatur anzeigt; Bestimmung eines durch den möglich fehlerhaften Sensor gemessenen ersten Gradienten der Kühlflüssigkeitstemperatur bis zu einem ersten Zeitpunkt nach Motorstop und Kennzeichnen des Sensors als fehlerfrei, wenn der Gradient einen Minimalwert überschreitet; Bestimmung eines durch den möglich fehlerhaften Sensor gemessenen zweiten Gradienten der Kühlflüssigkeitstemperatur zwischen dem Zeitpunkt und einem Zeitpunkt nach Motorstop und Kennzeichnen des Sensors als fehlerfrei, wenn der zweite Gradient einen Minimalwert überschreitet; Bestimmung der durch den möglich fehlerhaften Sensor zu einem Zeitpunkt nach Motorstop gemessenen Kühlflüssigkeitstemperatur und Kennzeichnen des Sensors als fehlerfrei, wenn die Kühlflüssigkeitstemperatur einen Maximalwert unterschreitet.

Überwacht wird ein Sensor, der im normalen Betrieb einen höheren Wert einnimmt als bei Kaltstart und nach Motorstopp wieder auf einen Umgebungswert abfällt. Dies ist typischerweise bei Temperatursensoren, insbesondere bei der Kühlwassertemperatur der Fall. Es wird nur das eine Sensorsignal für die Überwachung ausgewertet, weitere Vergleichssignale werden nicht benötigt. Nach jedem Fahrzyklus liegt ein Überwachungsergebnis vor, es müssen nicht bestimmte Betriebsbedingungen oder lange Standzeiten eingenommen werden. Es muss keine vollständige Abkühlung des Motors abgewartet werden, deren Erkennung zudem schwierig wäre oder eine laufende Uhr für die Standzeitmessung erfordern würde. Es wird gezielt überwacht, ob der Sensor in einem hohen Signalbereich verharrt.

In einer Weiterbildung des erfindungsgemäßen Verfahrens ist vorgesehen, dass der Motornachlauf verlängert wird, wenn der Sensor als möglich fehlerhaft gekennzeichnet wird. Durch die Verlängerung des Motornachlaufs wird sichergestellt, dass der Sensor und die zur Durchführung des Verfahrens notwendigen elektrischen Komponenten, z.B. Teile eines Steuergerätes, betriebsfähig bleiben.

In einer Weiterbildung des erfindungsgemäßen Verfahrens ist vorgesehen, dass der Sensor als möglich fehlerhaft gekennzeichnet wird, wenn dieser vor Motorstop dauerhaft mindestens den Maximalwert der Kühlflüssigkeitstemperatur anzeigt. Unter dauerhaft ist hier ein längerer Zeitraum, beispielsweise mehrere Minuten, zu verstehen.

### Zeichnungen

Nachfolgend wird ein Ausführungsbeispiel der vorliegenden Erfindung anhand der beiliegenden Zeichnung näher erläutert. Dabei zeigen:
- Fig. 1: Beispiele von Temperaturverläufen;
- Fig. 2: der von dem Sensor gemessene Temperaturverlauf nach Motorstop;
- Fig. 3: ein Ablaufdiagramm des Verfahrens.

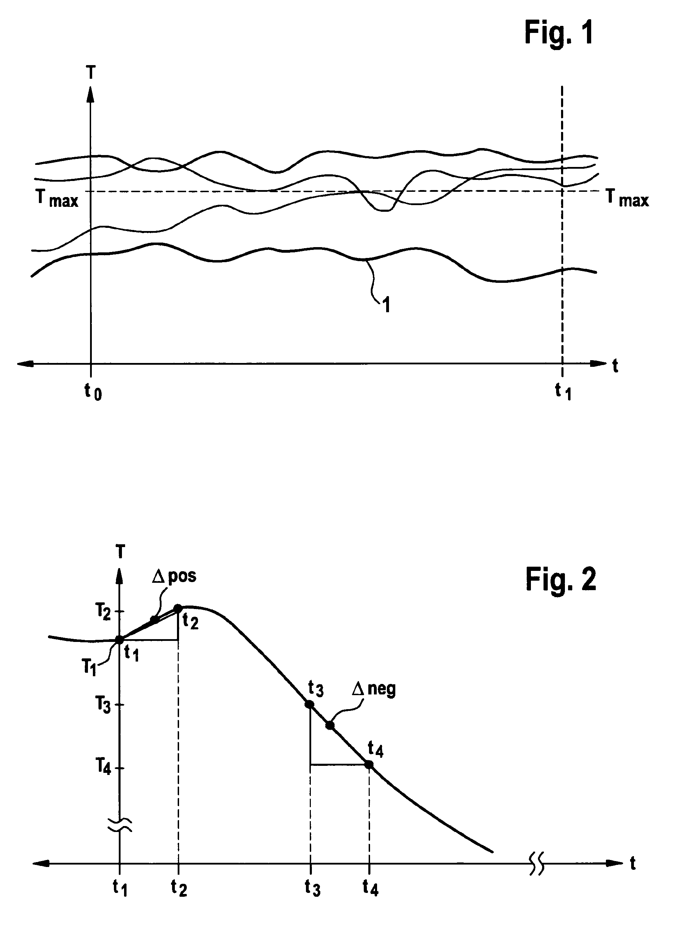

Fig. 1 zeigt ein Beispiel möglicher Signalverläufe eines Temperatursensors während des Betriebs eine Brennkraftmaschine über der Zeit. Dargestellt ist die von einem Sensor gemessene Temperatur T über der Zeit t. Es handelt sich um einen Temperatursensor im Kühlflüssigkeitskreislauf einer Brennkraftmaschine, der die gemessene Kühlflüssigkeitstemperatur in ein elektrisches Signal umwandelt. In Fig. 1 und 2 dargestellt ist das abgegebene und auf eine Temperatur umgerechnete Signal des Sensors. Wenn also in Fig. 1 und 2 von einer Temperatur T die Rede ist, so ist damit die von dem Sensor gemessene und angezeigte Temperatur nicht die real tatsächlich in dem Kühlkreislauf vorhandene Temperatur gemeint. Im Grunde lässt sich also die Darstellung der Figuren 1 und 2 auf die elektrischen Ausgangsgrößen des Temperatursensors lesen.

In Fig. 1 dargestellt sind vier Beispiele von Temperaturverläufen über der Zeit. Als horizontal gestrichelte Linie ist eine Maximaltemperatur Tmax eingezeichnet. Es sind vier verschiedene Kurven dargestellt, die mit den Ziffern 1, 2, 3 und 4 gekennzeichnet sind. Die Kurve 1 verläuft dauerhaft unterhalb der Maximaltemperatur Tmax. Kurve 2 verläuft weitgehend unterhalb der Maximaltemperatur Tmax und überschreitet kurz vor einem Zeitpunkt t1, diese kennzeichnet den Motorstop, die Temperatur Tmax. Kurve 3 überschreitet bis auf einen kurzen Zeitraum dauerhaft die Maximaltemperatur und Kurve 4 überschreitet dauerhaft die Maximaltemperatur. Zum Zeitpunkt t1 der Motorstop, die Brennkraftmaschine wird also abgeschaltet.

Im so genannten Motornachlauf, der sich an den Motorstop anschließt und bei dem einige elektrische Komponenten über den Motorstop hinaus betrieben werden, wird nun auch der Temperatursensor für die Kühlflüssigkeit einem Plausibilitätstest unterzogen. Dabei wird zunächst festgestellt, ob der Sensor möglicherweise fehlerhaft ist. Diese Feststellung kann nach zwei verschiedenen Kriterien erfolgen, zum einen kann als Kriterium herangezogen werden, ob die von dem Sensor beim Motorstop t1 gemessene Temperatur oberhalb der Maximaltemperatur Tmax liegt. Ist dies der Fall, wird unterstellt, dass der Sensor möglicherweise im hohen Signalbereich ausharrt und dauerhaft eine zu hohe Temperatur misst. In den Beispielen der Fig. 1 wäre dies in den Kurven 2, 3 und 4 der Fall. Alternativ kann geprüft werden, ob der Sensor über einen bestimmten Messzeitraum, dieser ist in Fig. 1 mit den Zeiten t0 und t1 gekennzeichnet und kann zum Beispiel mehrere Minuten oder auch länger betragen, dauerhaft den Maximalwert überschreitet. Dies ist in den Beispielen der Fig. 1 nur bei der Temperaturkurve 4 der Fall. Mit den zuvor geschilderten beiden Alternativen wird zunächst festgelegt, ob der Sensor möglicherweise fehlerhaft ist und im hohen Temperaturanzeigebereich ausharren könnte. Nachfolgend wird beschrieben, wie diese Hypothese verifiziert bzw. falsifiziert wird.

In Fig. 2 ist der von dem Sensor gemessene Temperaturverlauf nach Motorstop dargestellt. Zu beispielsweise in einem Steuergerät abgelegten festen Zeiten t1, t2, t3 und t3 oder anhand von Betriebsparametern ermittelten Zeiten t1 bis t4 werden jeweils die von dem Sensor gemessenen Temperaturen T gemessen und in einer Speicherzelle beispielsweise des Steuergerätes abgelegt. Der Zeit t1 ist dabei die Temperatur T1 der Zeit t2 die Temperatur T2 usw. zugeordnet. Dargestellt ist wie in Fig. 1 das von dem Sensor gelieferte und auf einen Temperaturwert umgerechnete Signal über der Zeit. Üblicherweise steigt die von dem Sensor gemessene Temperatur nach Motorstop zunächst kurzzeitig an, dieses Verhalten tritt zum Beispiel aufgrund der Stauwärme des Verbrennungsmotors auf. Es wird daher zunächst zwischen dem Motorstop t1 und einem danach liegenden ersten Zeitpunkt t2 der Temperaturgradient ΔT1 = (T2₂ - T1)₁/(t2 - t1) ermittelt. Liegt dieser oberhalb eines positiven Minimalwertes, so wird von einem fehlerfreien Sensor ausgegangen.

Sodann wird ein zweiter Temperaturgradient ΔT₂ = (T4 - T3)/(t4 - t3) ermittelt. Liegt der zweite Temperaturgradient ΔT₂ oberhalb eines negativen Minimalwertes, so wird der Sensor als fehlerfrei-eingestuft. Schließlich wird bestimmt, ob zum Zeitpunkt t4 die Temperatur T4 unterhalb eines für die Temperatur T4 bestimmten Maximalwertes liegt. Ist dies der Fall, so wird der Sensor ebenfalls als fehlerfrei eingestuft.

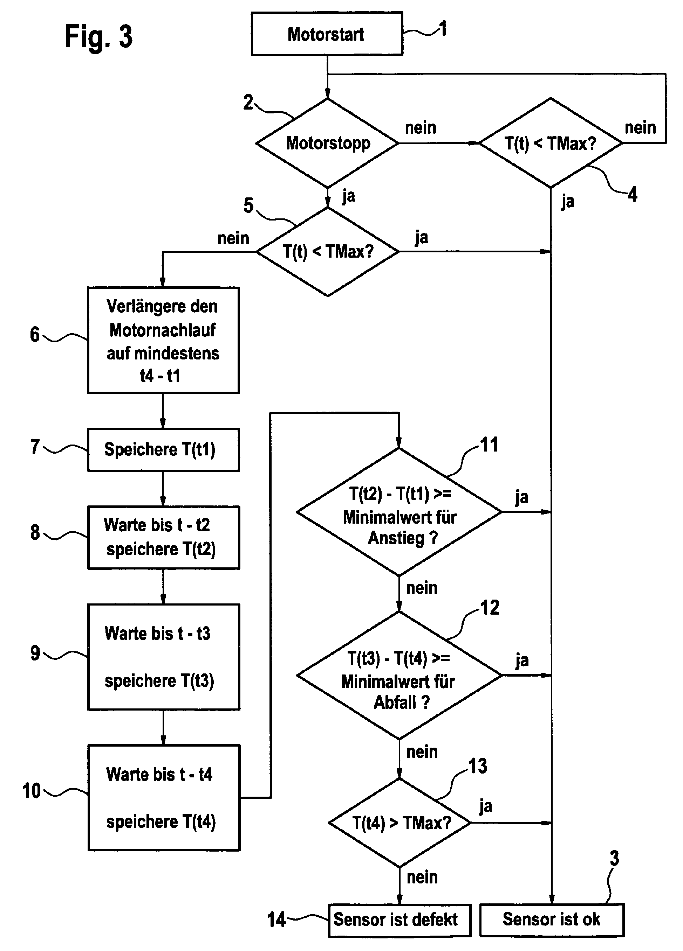

Fig. 3 zeigt das gesamte Verfahren als Ablaufdiagramm. Das Verfahren beginnt in einem Schritt 1 beim Motorstart. Bis zum Motorstop im Schritt 2 wird laufend überwacht, ob die Temperatur T(t) kleiner als die Temperatur Tmax ist. Ist dies der Fall, so wird der Sensor in einem Schritt 3 als funktionsfähig und fehlerfrei eingestuft. Ist dies nicht der Fall, so wird die Schleife weiter durchlaufen, bis die Bedingung Motorstop in Schritt 2 mit Ja erfüllt ist. In einem weiteren Prüfschritt 4 wird geprüft, ob im Augenblick des Motorstops die Temperatur T(t) kleiner als die Temperatur Tmax ist. Ist dies der Fall, so wird wiederum auf den Schritt 3 und damit den fehlerfreien Sensor verzweigt. Ist dies nicht der Fall, so wird in einem Schritt 6 zunächst der Motornachlauf auf mindestens den Wert t4 - t1 verlängert. Sodann wird in einem siebten Schritt der Wert T(t1) gespeichert. Nach Ablauf der Zeitspanne bis zum Zeitpunkt t2 wird in Schritt 8 auch die Temperatur T(t2) zu diesem Zeitpunkt gespeichert. In einem Schritt 9 wird zum Zeitpunkt t = t3 die Temperatur T(t3) gespeichert und entsprechend in einem Schritt 10 bei t = t4 die Temperatur T(t4). In einem Schritt 11 wird sodann geprüft, ob der Temperaturgradient T(t2) - T(t1) zwischen den Zeitpunkten t1 und t2 größer oder gleich dem Minimalwert für den Anstieg ist. Ist dies der Fall, so wird der Sensor im Schritt 3 als fehlerfrei eingestuft, ist dies nicht der Fall, so wird in einem Schritt 12 geprüft, ob der Temperaturgradient T(t4) - T(t3) zwischen den Zeitpunkten t3 und t4 größer oder gleich dem Minimalwert für den Temperaturabfall in diesem Zeitbereich ist. Ist dies der Fall, so wird der Sensor im Schritt 3 als fehlerfrei eingestuft, ist dies nicht der Fall, so wird in einem Schritt 13 geprüft, ob die Temperatur T(t4) im Zeitpunkt t4 kleiner als eine Temperatur Tmax(t4) ist. Ist dies der Fall, so wird der Sensor ebenfalls im Schritt 3 als fehlerfrei eingestuft, ist auch dies nicht der Fall, so wird der Sensor in einem Schritt 14 endgültig als defekt gekennzeichnet.

## Patentansprüche

1. Verfahren zur Überwachung der Funktionsfähigkeit eines Temperatursensors, der ein elektrisches Signal abhängig von der gemessenen Temperatur abgeben kann und im Kühlwasserkreislauf einer Brennkraftmaschine angeordnet ist, **gekennzeichnet durch** folgende Schritte:
1.1 Kennzeichnen des Sensors als möglich fehlerhaft, wenn der Sensor bei Motorstop (t1) mindestens einen Maximalwert (Tmax) der Kühlflüssigkeitstemperatur anzeigt;
1.2 Bestimmung eines **durch** den möglich fehlerhaften Sensor gemessenen ersten Gradienten der Kühlflüssigkeitstemperatur bis zu einem ersten Zeitpunkt (t2) nach Motorstop (t1) und Kennzeichnen des Sensors als fehlerfrei, wenn der Gradient (ΔT1 = (T2₂ - T1)₁/(t2 - t1)) einen Minimalwert überschreitet;
1.3 Bestimmung eines **durch** den möglich fehlerhaften Sensor gemessenen zweiten Gradienten der Kühlflüssigkeitstemperatur zwischen dem Zeitpunkt (t3) und einem Zeitpunkt (t4) nach Motorstop (t1) und Kennzeichnen des Sensors als fehlerfrei, wenn der zweite Gradient (ΔT2 = (T4₂ - T3)₁/(t4 - t3)) einen Minimalwert überschreitet;
1.4 Bestimmung der **durch** den möglich fehlerhaften Sensor zu einem Zeitpunkt (t4) nach Motorstop (t1) gemessenen Kühlflüssigkeitstemperatur und Kennzeichnen des Sensors als fehlerfrei, wenn die Kühlflüssigkeitstemperatur (TK) einen Maximalwert (Tmax(t4)) unterschreitet.

2. Verfahren nach Anspruch 1, **dadurch gekennzeichnet, dass** der Motornachlauf verlängert wird, wenn der Sensor als möglich fehlerhaft **gekennzeichnet** wird.

3. Verfahren nach einem der vorhergehenden Ansprüche, **dadurch gekennzeichnet, dass** der Sensor als möglich fehlerhaft **gekennzeichnet** wird, wenn dieser vor Motorstop dauerhaft mindestens den Maximalwert der Kühlflüssigkeitstemperatur anzeigt.

## Claims

1. Method for monitoring the functional capacity of a temperature sensor which can output an electrical signal as a function of the measured temperature and is arranged in the cooling water circuit of an internal combustion engine, **characterized by** the following steps:
1.1 Characterization of the sensor as possibly faulty if the sensor displays at least one maximum value (Tmax) of the coolant temperature when the engine stops (t1);
1.2 Determination of a first gradient of the coolant temperature, measured by the possibly faulty sensor, to a first time (t2) after the engine stops (t1) and characterization of the sensor as fault-free if the gradient (ΔT1 = (T2₂ - T1)₁/ (t2 - t1)) exceeds a minimum value;
1.3 Determination of a second gradient of the coolant temperature, measured by the possibly faulty sensor, between the time (t3) and a time (t4) after the engine stops (t1) and characterization of the sensor as fault-free if the second gradient (ΔT2 = (T4₂ - T3)₁/ (t4 - t3)) exceeds a minimum value;
1.4 Determination of the coolant temperature, measured by the possibly faulty sensor at a time (t4) after the engine stops (t1), and characterization of the sensor as fault-free if the coolant temperature (TK) drops below a maximum value (Tmax(t4)).

2. Method according to Claim 1, **characterized in that** the running on of the engine is prolonged if the sensor is **characterized** as possibly faulty.

3. Method according to one of the preceding claims, **characterized in that** the sensor is **characterized** as possibly faulty if said sensor continuously displays at least the maximum value of the coolant temperature before the engine stops.

## Revendications

1. Procédé pour surveiller le bon fonctionnement d'un capteur de température fournissant un signal électrique dépendant de la température mesurée et installé dans le circuit d'eau de refroidissement d'un moteur à combustion interne,
procédé **caractérisé par** les étapes suivantes :
1.1 on considère que le capteur est essentiellement défectueux si à l'arrêt du moteur (t1), le capteur indique au moins une valeur maximale (Tmax) de la température du liquide de refroidissement,
1.2 on détermine un premier gradient de la température du liquide de refroidissement mesurée par un capteur éventuellement défectueux jusqu'à un premier instant (t2) après l'arrêt du moteur (t1) et on considère le capteur comme non défectueux si le gradient (ΔT1 = (T2₂ - T1)₁/(t2 - t1)) dépasse une valeur minimale,
1.3 on détermine un second gradient de la température du liquide de refroidissement, mesurée par un capteur éventuellement défectueux, entre l'instant (t3) et un instant (t4) après l'arrêt du moteur (t1) et on considère le capteur comme non défectueux si le second gradient (ΔT2 = (T4₂ - T3)₁/(t4 - t3)), dépasse une valeur minimale,
1.4 on détermine la température du liquide de refroidissement mesurée à un instant (t4) après l'arrêt du moteur (t1) par un capteur éventuellement défectueux et on considère le capteur comme non défectueux si la température du liquide de refroidissement (TK) est inférieure à une valeur maximale (Tmax(t4)).

2. Procédé selon la revendication 1,
**caractérisé en ce qu'**
on prolonge la fin de fonctionnement du moteur si le capteur est jugé comme éventuellement défectueux.

3. Procédé selon l'une des revendications précédentes,
**caractérisé en ce qu'**
on considère le capteur comme éventuellement défectueux si avant l'arrêt du moteur il indique en permanence au moins la valeur maximale de la température du liquide de refroidissement.
